# FASCICULE DE BREVET EUROPEEN

(11) **EP 0 498 731 B1**
(45) Date de publication et mention de la délivrance du brevet: **10.08.1994**
(21) Numéro de dépôt: 92400311.4
(22) Date de dépôt: 07.02.1992
(51) Int. Cl.: F27B 15/02

(54) **Procédé et installation pour le traitement thermique de minéraux sous forme pulvérulente**
Verfahren und Anlage für die Wärmebehandlung von pulverförmigen Mineralien
Process and installation for the thermic treatment of pulverulent minerals

(30) Priorité: 08.02.1991 FR 9101445
(43) Date de publication de la demande: 12.08.1992
(73) Titulaire: F C B, 93100 Montreuil Cédex (FR)
(72) Inventeur: Rodet, Pierre, F-77620 Bransles (FR)
(74) Mandataire: Fontanié, Etienne

(56) Documents cités:
- DE-A- 3 705 892
- FR-A- 2 393 772
- GB-A- 942 893
- GB-A- 1 145 921

## Description

La présente invention a trait aux procédés et installations pour le traitement thermique de matières minérales sous forme pulvérulente au moyen de gaz dans lesquels ces dernières sont mises en suspension et plus particulièrement aux traitements effectués dans des installations constituées par un four où les matières préalablement réchauffées sont traitées en suspension dans un courant de gaz chauds produits par la combustion d'air et d'un combustible injecté dans le four, et par deux groupes de cyclones placés respectivement en amont et en aval du four et reliés entre eux et au four par des conduites agencées de telle sorte que les gaz d'échappement du four passent successivement dans tous les cyclones d'un groupe tandis qu'un courant d'air traverse tous les cyclones de l'autre groupe avant de pénétrer dans le four où il est utilisé comme air de combustion. Les échanges thermiques entre les matières à traiter et les gaz d'échappement du four, d'une part, et entre les matières traitées et l'air, d'autre part, se font en partie dans les cyclones et en partie dans les conduites où les matières sont mises en suspension dans les gaz qui y circulent et entraînées jusqu'aux cyclones; dans ces derniers, les matières sont séparées du courant gazeux pour être remises en suspension dans une partie amont du circuit des gaz, de façon à réaliser globalement des échanges à contre-courant.

A la sortie du premier groupe de cyclones, où les matières sont préchauffées, les gaz d'échappement passent dans un filtre, généralement un électrofiltre, avant d'être rejetés à l'atmosphère. Les poussières recueillies dans ce filtre sont en majeure partie réintroduites dans l'installation, mais pour éviter un engorgement des filtres par enrichissement progressif en poussières du circuit des gaz, une partie des poussières est rejetée ou dirigée directement vers la sortie de l'installation et mélangée avec le produit traité.

La première solution conduit à une perte de production. Avec la seconde solution, le produit traité contient un pourcentage faible mais non négligeable de poussières n'ayant pas subi de traitement. Pour certaines applications, cela peut présenter un inconvénient. C'est en particulier, le cas de la calcination de l'alumine où la présence d'hydrate d'alumine dans le produit fini peut être gênante, et de la calcination des phosphates.

Le but de la présente invention est de supprimer cet inconvénient en faisant subir un traitement thermique à la partie des poussières qui ne peut pas être renvoyée dans le circuit principal des gaz.

Le procédé objet de la présente invention est caractérisé en ce qu'une partie des poussières recueillies dans le filtre de dépoussiérage est mise en suspension dans un courant d'air dérivé du courant d'air chaud ayant servi à refroidir les matières sortant du four, puis est séparé dudit courant d'air dérivé et mélangé aux matières traitées partiellement ou totalement refroidies, ledit courant d'air dérivé étant ensuite mélangé aux gaz d'échappement du four. Eventuellement, un combustible pourrait être injecté dans ledit courant d'air dérivé pour y brûler et fournir un supplément de calories aux poussières.

L'installation objet de l'invention est caractérisée en ce qu'elle comporte un échangeur auxiliaire constitué par un cyclone et une conduite reliant l'entrée dudit cyclone à la sortie des gaz de l'un des cyclones du second groupe (refroidisseur), la sortie des gaz dudit cyclone étant raccordée à l'une des conduites reliée à la sortie de l'un des cyclones du premier groupe (préchauffeur), et en ce que ce cyclone auxiliaire a un diamètre nettement inférieur à celui des cyclones des premier et second groupes et, par conséquent, un rendement de captation des poussières nettement supérieur. Un brûleur peut être implanté sur la conduite reliant l'entrée dudit cyclone auxiliaire au refroidisseur. La sortie des matières du cyclone auxiliaire est, de préférence, reliée à la sortie des matières du refroidisseur. Lorsque l'installation comporte un refroidisseur supplémentaire placé en aval, en considérant le sens de circulation des matières, du second groupe de cyclones, la sortie des matières du cyclone auxiliaire pourra être reliée à l'entrée ou à la sortie dudit refroidisseur supplémentaire.

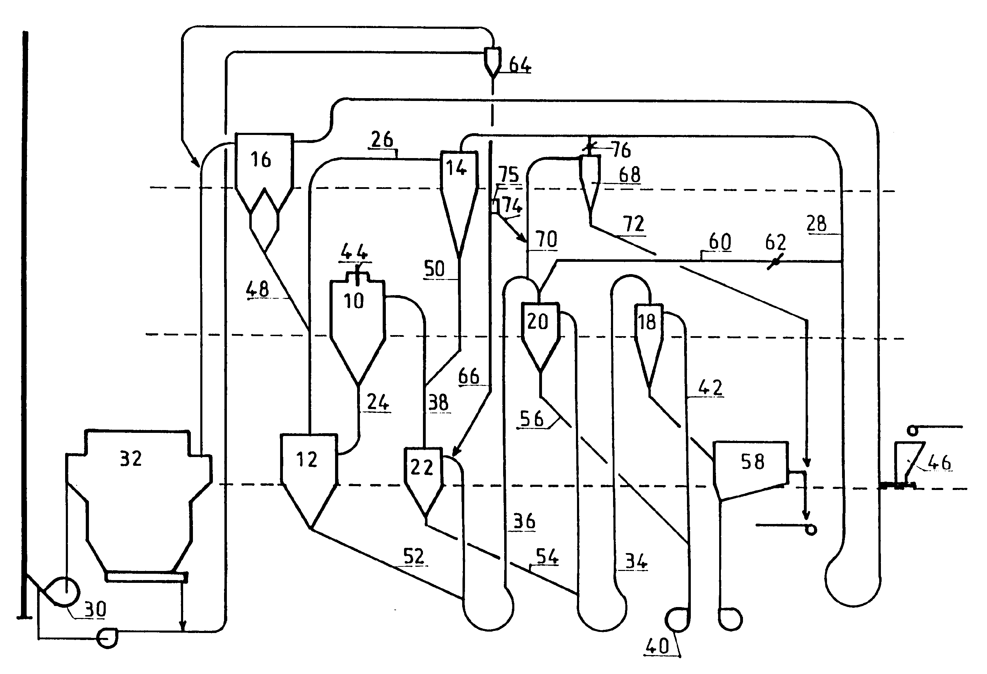

Les caractéristiques de l'invention apparaîtront plus clairement à la lecture de la description qui suit et se réfère au dessin l'accompagnant qui montre, à titre d'exemple non limitatif, une forme de réalisation de l'invention. L'unique figure de ce dessin est le schéma d'une installation de calcination conforme à l'invention.

L'installation représentée sur les dessins comprend un four de calcination en suspension 10, un premier groupe de cyclones 12, 14, 16, et un second groupe de cyclones 18, 20 et 22.

Les cyclones du premier groupe sont reliés entre eux et au four 10 par des conduites 24, 26 et 28 de telle sorte que les gaz d'échappement du four traversent successivement les cyclones 12, 14 et 16, dans cet ordre, en circulant dans ces conduites. A la sortie du cyclone 16, les gaz aspirés par un ventilateur 30 traversent un filtre de dépoussiérage 32 et sont rejetés à l'atmosphère.

Les cyclones du second groupe sont reliés entre eux et au four par des conduites 34, 36 et 38 de telle sorte que de l'air insufflé par un ventilateur 40 dans une conduite 42 reliée à l'entrée du cyclone 18 traverse successivement les trois cyclones de ce groupe avant de pénétrer dans le four où il est utilisé comme air de combustion pour brûler un combustible injecté par une tuyère 44.

Un dispositif d'alimentation 46 permet d'introduire les produits à traiter dans la conduite 28 où ils sont mis en suspension dans les gaz et entraînés jusqu'au cyclone 16. Dans celui-ci, les produits sont séparés des gaz et collectés dans sa partie inférieure d'où ils sont évacués par gravité au moyen d'un tuyau 48 reliant la pointe du cyclone à la conduite 26. Dans cette dernière, les produits sont remis en suspension dans les gaz et entraînés jusqu'au cyclone 14. Ils sont ensuite séparés du courant gazeux et dirigés vers la conduite 38 par un tuyau 50. L'air circulant dans la conduite 38 entraîne dans le four 10 les produits qui ont été réchauffés par les gaz d'échappement circulant dans les conduites 26 et 28 et les cyclones 14 et 16. Dans le four, les produits sont maintenus en suspension dans le courant d'air et sont calcinés grâce à la chaleur fournie par la combustion de l'air et du combustible injecté par la tuyère 44.

Les gaz de combustion s'échappent à la partie inférieure du four, en entraînant les produits calcinés, et sont amenés par la conduite 24 dans le cyclone 12. Les produits calcinés séparés des gaz d'échappement dans le cyclone 12 sont introduits dans la conduite 36 au moyen d'un tuyau 52 reliant cette dernière à la pointe du cyclone 12, et passent successivement dans le cyclone 22, le tuyau 54, la conduite 34, le cyclone 20, le tuyau 56, la conduite 42 et le cyclone 18. Sur ce trajet , les produits calcinés rencontrent de l'air de plus en plus frais qui abaisse leur température. A la sortie du cyclone 18, les produits calcinés peuvent subir un refroidissement supplémentaire dans un refroidisseur 58 et être ensuite dirigés vers des aires de stockage ou des postes de chargement.

Une conduite 60 reliant la sortie du cyclone 20 à la conduite 28 permet à une fraction de l'air de refroidissement de court-circuiter le four 10 pour éviter une dilution trop importante des gaz de combustion; le débit d'air court-circuitant le four peut être réglé au moyen d'un volet 62 ou tout autre moyen adéquat.

Avant d'être rejetés à l'atmosphère, les gaz échappement du four sont dépoussiérés dans le filtre 32. Les poussières recueillies sont transportées pneumatiquement jusqu'à un cyclone 64 disposé dans la partie supérieure de l'installation. La majeure partie des poussières séparées du gaz porteur dans le cyclone 64 est réintroduite dans l'installation, immédiatement en amont de l'entrée du cyclone 22, par un tuyau 66.

Conformément à la présente invention, l'autre partie des poussières est traitée dans un échangeur thermique constitué par un cyclone 68 et une conduite 70 reliant la sortie du cyclone 20 à l'entrée du cyclone 68; la sortie des gaz du cyclone 68 est raccordée à la conduite 28 et les poussières sortant de ce cyclone sont amenées, par un tuyau 72, à la sortie du refroidisseur 58 où elles sont mélangées aux matières traitées froides. Un tuyau 74 branché sur le tuyau 66 permet de diriger vers la conduite 70 et d'y introduire une partie des poussières. Le débit des poussières dérivées vers la conduite 70 peut être réglé au moyen d'un distributeur 75. Un volet de réglage 76 placé sur la conduite reliant la sortie des gaz du cyclone 68 à la conduite 28 permet de régler le débit d'air traversant le cyclone.

Le diamètre du cyclone 68 est nettement inférieur à celui des cyclones 12 à 22, et son rendement de captation est, par conséquent, bien meilleur, de sorte que pratiquement toutes les poussières introduites dans la conduite 70 sont recueillies à la pointe du cyclone 68. Le débit des poussières qui est ainsi extrait en continu du circuit principal des gaz est suffisant pour maintenir la charge en poussières des gaz d'échappement à une valeur convenable pour éviter l'engorgement du filtre. Par ailleurs, le traitement thermique que ces poussières subissent dans l'échangeur 68-70 permet de les mélanger sans inconvénient aux matières traitées dans l'installation. Par exemple, dans les installations de calcination d'alumine, l'hydrate d'alumine pourra être calciné ou au moins transformé en monohydrate d'alumine, moins gênant. Si nécessaire, l'échangeur 68-70 pourra être équipé d'un brûleur pour compléter la calcination.

Au lieu d'être reliée à la sortie des gaz du cyclone 20, l'entrée du cyclone 68 pourra être reliée à la sortie du cyclone 22. Les poussières sortant du cyclone 68 pourraient être amenées à l'entrée du refroidisseur 58.

## Revendications

1. Procédé de traitement thermique de matières minérales pulvérulentes au moyen de gaz dans lesquels ces dernières sont mises en suspension, consistant à réchauffer les matières à traiter au moyen des gaz d'échappement d'un four, à les traiter ensuite dans ledit four puis à les refroidir au moyen d'un courant d'air qui est ensuite utilisé comme air de combustion dans le four, les gaz d'échappement du four étant dépoussiérés avant d'être rejetés à l'atmosphère et la majeure partie des poussières recueillies étant mélangée aux matières traitées à leur sortie du four, caractérisé en ce que l'autre partie des poussières est mise en suspension dans un courant d'air dérivé du courant d'air chaud ayant servi à refroidir les matières sortant du four, puis est séparé dudit courant d'air dérivé et mélangé aux matières traitées au moins partiellement refroidies, ledit courant d'air dérivé étant ensuite mélangé aux gaz d'échappement du four.

2. Procédé selon la revendication 1, caractérisé en ce qu'un combustible est injecté dans ledit courant d'air dérivé.

3. Installation pour le traitement thermique au moyen de gaz de matières minérales en poudre comportant un four (10), deux groupes de cyclones placés, respectivement, en amont et en aval du four et reliés entre eux et au four par des conduites agencées de telle sorte que les gaz d'échappement du four passent successivement dans tous les cyclones (12, 14, 16) du premier groupe tandis qu'un courant d'air traverse tous les cyclones (18, 20, 22) du second groupe avant de pénétrer dans le four où il est utilisé comme air de combustion, et un filtre pour le dépoussiérage des gaz d'échappement, caractérisée en ce qu'elle comporte, en outre, un échangeur auxiliaire constitué par un cyclone (68) et une conduite (70) reliant l'entrée dudit cyclone à la sortie des gaz de l'un des cyclones du second groupe, la sortie des gaz dudit cyclone (68) étant raccordée à l'une des conduites (28) reliée à la sortie des gaz de l'un des cyclones du premier groupe, et des moyens pour alimenter ledit échangeur auxiliaire avec une partie des poussières recueillies dans le filtre (32), et en ce que le cyclone (68) de l'échangeur auxiliaire a un diamètre nettement inférieur à celui des cyclones des premier et second groupes et, par conséquent, un rendement de captation des poussières nettement supérieur.

4. Installation selon la revendication 3, caractérisée en ce que ledit échangeur auxiliaire (68-70) est équipé d'un brûleur.

5. Installation selon la revendication 3 ou 4, caractérisée en ce que la sortie des matières du cyclone (68) de l'échangeur auxiliaire est reliée à la sortie des matières traitées froides de l'installation.

6. Installation selon la revendication 3 ou 4, et comportant un refroidisseur supplémentaire (58) placé en aval, en considérant le sens de circulation des matières, du second groupe de cyclones, caractérisé en ce que la sortie des matières du cyclone (68) de l'échangeur auxiliaire est reliée à l'entrée dudit refroidisseur supplémentaire.

## Patentansprüche

1. Verfahren zur Wärmebehandlung von pulvrigen Mineralien mittels Gas, in dem letztere in Schwebe gebracht werden, das darin beruht, das zu behandelnde Gut mit dem Abgas eines Ofens aufzuwärmen, es dann in diesem Ofen zu behandeln und es anschließend mit einem Luftstrom zu kühlen, der daraufhin als Ofenverbrennungsluft benutzt wird, wobei die Ofenabgase vor der Abgabe an die Umgebung entstaubt werden und der größte Teil des aufgefangenen Staubs am Auslauf des Ofens mit dem behandelten Produkt vermischt wird, dadurch gekennzeichnet, daß der restliche Staub in einem von dem Warmluftstrom, der zum Kühlen der aus dem Ofen auslaufenden Produkte benutzt wurde, abgezweigten Luftstrom in Schwebe gebracht, dann von diesem abgeweigten Luftstrom getrennt und mit den behandelten und mindestens teilweise abgekühlten Produkten vermischt wird, wobei der abgezweigte Luftstrom anschließend den Ofenabgasen beigemischt wird.

2. Verfahren gemäß Anspruch 1, dadurch gekennzeichnet, daß in besagten abgezweigten Luftstrom ein Brennstoff eingespritzt wird.

3. Anlage zur Wärmebehandlung von pulvrigen Mineralien mittel Gas, umfassend einen Ofen (10), zwei Zyklongruppen, die einlauf- bzw. auslaufseitig des Ofens angeordnet und untereinander und mit dem Ofen durch Leitungen verbunden sind, und zwar derart, daß die Ofenabgase nacheinander alle Zyklone (12, 14, 16) der ersten Gruppe durchströmen, während ein Luftstrom alle Zyklone (18, 20, 22) der zweiten Gruppe durchströmt, bevor er in den Ofen gelangt, wo er als Verbrennungsluft benutzt wird, und ein Filter zur Abgasentstaubung, dadurch gekennzeichnet, daß sie ferner einen Hilfstauscher umfaßt, der aus einem Zyklon (68) und einer Leitung (70) besteht, die den Eintritt besagten Zyklons mit dem Gasaustritt eines der Zyklone der zweiten Gruppe verbindet, wobei der Gasaustritt besagten Zyklons (68) mit einer der an den Gasaustritt eines der Zyklone der ersten Gruppe angeschlossenen Leitungen (28) verbunden ist, und aus Mitteln zur Beschickung des Hilfstauschers mit einem Teil des im Filter (32) aufgefangenen Staubs, und daß der Zyklon (68) des Hilfstauschers einen weitaus geringeren Durchmesser hat als die Zyklone der ersten und der zweiten Gruppe und demzufolge einen weitaus höheren Staubfangwirkungsgrad.

4. Anlage gemäß Anspruch 3, dadurch gekennzeichnet, daß besagter Hilfswärmetauscher (68-70) mit einem Brenner ausgerüstet ist.

5. Anlage gemäß Anspruch 3 oder 4, dadurch gekennzeichnet, daß der Produktaustritt aus dem Zyklon (68) des Hilfstauschers mit dem Auslauf der kalten behandelten Produkte aus der Anlage verbunden ist.

6. Anlage gemäß Anspruch 3 oder 4, ausgerüstet mit einem zusätzlichen Kühler (58), der in Materialflußrichtung gesehen auslaufseitig der zweiten Zyklongruppe angeordnet ist, dadurch gekennzeichnet, daß der Produktaustritt des Zyklons (68) des Hilfstauschers mit den Eintritt besagten zusätzlichen Kühlers verbunden ist.

## Claims

1. Process for the heat treatment of powdered mineral materials by means of gases in which the latter are put in suspension, consisting in heating the materials to be treated by means of the exhaust gases of a kiln, in treating them later on in the said kiln and in cooling them by means of an airstream which is used later on in the kiln as combustion air, the kiln exhaust gases being dedusted before being discharged to atmosphere and the greater part of the dust collected being mixed with the treated materials as they are discharged from the kiln, characterized in that the remaining part of the dust is put in suspension in an airstream derived from the hot airstream previously used to cool the materials discharged from the kiln, and separated thereafter from the said derived airstream and mixed with the at least partially cooled treated materials, the said derived airstream being mixed afterwards with the kiln exhaust gases.

2. Process according to claim 1, characterized in that a fuel is injected in the said derived airstream.

3. Plant for the heat treatment of powdered mineral materials by means of gases, consisting of a kiln (10), two sets of cyclones installed, respectively, upstream and downstream from the kiln and connected with each other and with the kiln by ducts arranged in such a way that the kiln exhaust gases flow successively through all the cyclones (12, 14, 16) of the first set while an airstream flows through all the cyclones (18, 20, 22) of the second set before entering the kiln in which it is used as combustion air , and an exhaust gas dedusting filter, characterized in that it includes also an auxiliary exchanger consisting of a cyclone (68) and a duct (70) which connects the inlet of the said cyclone with the gas outlet of one of the cyclones of the second set, the gas outlet of the said cyclone (68) being connected with one of the ducts (28) connected with the gas outlet of one of the cyclones of the first set, and means for supplying the said auxiliary exchanger with part of the dust collected in the filter (32), and in that the cyclone (68) of the auxiliary exchanger has a diameter significantly smaller than that of the cyclones of the first and second sets, and, consequently, a significantly higher dust collection efficiency.

4. Plant according to claim 3, characterized in that the said auxiliary exchanger (68-70) is equipped with a burner.

5. Plant according to claim 3 or 4, characterized in that the material outlet of the cyclone (68) of the auxiliary exchanger is connected with the cold treated material outlet of the plant.

6. Plant according to claim 3 or 4, and including an additional cooler (58) located downstream from the second set of cyclones, when one considers the material flowing direction, characterized in that the material outlet of the cyclone (68) of the auxiliary exchanger is connected to the inlet of the said additional cooler.
